# EUROPÄISCHE PATENTSCHRIFT

(11) **EP 2 462 334 B1**
(45) Veröffentlichungstag und Bekanntmachung des Hinweises auf die Patenterteilung: **11.03.2015**
(21) Anmeldenummer: 10722685.4
(22) Anmeldetag: 28.05.2010
(51) Int. Cl.: F02M 31/16, F28D 7/10

(54) **VORWÄRMVORRICHTUNG ZUM VORWÄRMEN VON FLÜSSIGEM UND/ODER GASFÖRMIGEM TREIBSTOFF FÜR EINE BRENNKRAFTMASCHINE**
PREHEATING DEVICE FOR PREHEATING LIQUID AND/OR GASEOUS FUEL FOR AN INTERNAL COMBUSTION ENGINE
DISPOSITIF DE PRÉCHAUFFAGE DESTINÉ À PRÉCHAUFFER DU CARBURANT À L'ÉTAT LIQUIDE ET/OU GAZEUX POUR UN MOTEUR À COMBUSTION INTERNE

(30) Priorität: 04.06.2009 DE 202009007875 U
(43) Veröffentlichungstag der Anmeldung: 13.06.2012
(73) Patentinhaber: Wüst, Manfred, 49577 Kettenkamp (DE)
(72) Erfinder: Wüst, Manfred, 49577 Kettenkamp (DE)
(74) Vertreter: Eisenführ Speiser
(86) Internationale Anmeldenummer: PCT/EP2010/057404
(87) Internationale Veröffentlichungsnummer: WO 2010/139620

(56) Entgegenhaltungen:
- DE-A1- 2 733 590
- DE-A1- 3 203 764
- DE-A1- 3 607 007
- DE-A1- 3 815 608
- DE-A1- 4 014 902
- DE-A1- 4 309 833
- DE-C- 639 099
- DE-U1- 8 634 203
- FR-A- 758 810
- US-A- 3 907 028
- US-A- 4 306 617
- US-A- 4 395 997
- US-A- 4 422 429
- US-A1- 2004 032 033

## Beschreibung

Die Erfindung betrifft eine Vorwärmvorrichtung zum Vorwärmen von flüssigem und/oder gasförmigem Treibstoff für eine Brennkraftmaschine, mit einem Treibstoffeinlass, einem Treibstoffauslass, einem den Treibstoffeinlass mit dem Treibstoffauslass verbindenden Treibstoffdurchleitungsmittel zum Durchleiten des durch den Treibstoffeinlass eintretenden Treibstoffes zum Treibstoffauslass und einem Wärmeübertragungsmittel zur Übertragung von Wärme in das Treibstoffdurchleitungsmittel, wobei das Wärmeübertragungsmittel eine durch eine Wandung begrenzte Wärmemittelkammer zur Aufnahme eines Wärme abgebenden Wärmemittels aufweist, das Treibstoffdurchleitungsmittel zumindest abschnittsweise an der Wandung angeordnet ist, das Treibstoffdurchleitungsmittel und das Wärmeübertragungsmittel gemeinsam eine Flächenwärmetauscher-Anordnung bilden, das Treibstoffdurchleitungsmittel die Wärmemittelkammer im Wesentlichen umgibt und mindestens eine durch eine Wandung begrenzte Vorwärmkammer und eine nachgeschaltete Reaktorkammer aufweist und die Vorwärmkammer und die Reaktorkammer derart ausgerichtet sind, dass die Fließrichtung des Treibstoffes durch die Reaktorkammer zumindest teilweise etwa entgegengesetzt zu der Fließrichtung des Treibstoffes durch die Vorwärmkammer orientiert ist.

Eine derartige Vorwärmeinrichtung ist in der US 2004/0032033A1 offenbart.

Beim Betrieb von Brennkraftmaschinen ist es von Vorteil, den Treibstoff vor Einbringung in den Brennraum in einer Vorwärmvorrichtung der eingangs genannten Art vorzuwärmen, um insbesondere den Treibstoffverbrauch und auch die Schadstoffemission in günstiger Weise durch Expansion des Treibstoffes während der Erwärmung zu beeinflussen. Durch die Vorwärmung wird der Treibstoff dünnflüssiger und deshalb besser zündfähig.

Bekannt sind im Stand der Technik unterschiedliche Vorwärmvorrichtungen, die sich durch verschiedene besondere Konstruktionen und/oder Betriebsarten voneinander unterscheiden.

So wird beispielsweise in der DE 32 03 764 A1 vorgeschlagen, eine Vorwärmvorrichtung so zu gestalten und zu steuern, dass der Treibstoff auf eine bestimmte Temperatur gebracht wird, wodurch allerdings die Schadstoffemission nur um ein geringes Maß günstig zu beeinflussen ist.

In der DE 40 14 902 A1 wird dagegen vorgeschlagen, den Treibstoff vor der Zuführung in den Brennraum der Brennkraftmaschine bestimmten thermischen, elektrischen und/oder magnetischen Einflüssen zu unterwerfen und insbesondere mit Luft anzureichern und den mit Luft angereicherten Treibstoff einem Hochfrequenzfeld auszusetzen, so dass die überschüssige Luft wieder entzogen wird. Die danach möglicherweise auftretenden Verpuffungsvorgänge im Brennraum der Brennkraftmaschine lassen jedoch einen gefahrlosen Verbrennungsbetrieb nicht zu.

Aus der DE 43 09 833 A1 des Anmelders ist ein Verfahren zum Betrieb einer Brennkraftmaschine bekannt, bei welchem flüssiger Treibstoff vor Einbringung in einen Brennraum erwärmt und in einen innermolekular instabilen Zustand auf etwa Vaporationstemperatur gebracht wird, indem der Treibstoff in einer Vorwärmstufe auf eine Basistemperatur zwischen 40°C und 60°C erwärmt, in einer Expansionsstufe unter Erwärmung auf eine Temperatur zwischen 50°C und 150°C bei gleichbleibender Energiedichte expandiert, in einer nachfolgenden Reaktionsstufe durch Erhitzung auf eine Temperatur zwischen 80°C und 200°C in einen innermolekular instabilen Zustand überführt und in einer Vaporationsstufe unter Druckerhöhung auf einen Druck zwischen 15 und 40 bar bis zur Vaporationstemperatur erhitzt wird. Die hierfür verwendete Vorwärmvorrichtung ist entsprechend vierstufig mit jeder Stufe zugeordneten Heizelementen und Temperaturfühlern ausgebildet, Wobei der aus der Vorwärmvorrichtung abfließende Treibstoff über eine Thermodruckleitung dem Brennraum der Brennkraftmaschine zugeführt wird.

Die FR 758810 A und die US 4 422 429 A offenbaren jeweils eine Vorwärmvorrichung zum Vorwärmen von flüssigem Treibstoff für eine Brennkraftmaschine, mit einem Treibstoffeinlass, einem Treibstoffauslass, einem den Treibstoffeinlass mit dem Treibstoffauslass verbindenden Treibstoffdurchleitungsmittel zum Durchleiten des durch den Treibstoffeinlass eintretenden Treibstoffes zum Treibstoffauslass und einem Wärmeübertragungsmittel zur Übertragung von Wärme in das Treibstoffdurchleitungsmittel, wobei das Treibstoffdurchleitungsmittel und das Wärmeübertragungsmittel gemeinsam eine Flächenwärmetauscher-Anordnung bilden.

Es ist eine Aufgabe der vorliegenden Erfindung, eine Vorwärmvorrichtung der eingangs genannten Art mit einer höheren Effektivität zu schaffen.

Diese Aufgabe wird gelöst durch eine Vorwärmvorrichtung zum Vorwärmen von flüssigem und/oder gasförmigem Treibstoff für eine Brennkraftmaschine, mit einem Treibstoffeinlass, einem Treibstoffauslass, einem den Treibstoffeinlass mit dem Treibstoffauslass verbindenden Treibstoffdurchleitungsmittel zum Durchleiten des durch den Treibstoffeinlass eintretenden Treibstoffes zum Treibstoffauslass und einem Wärmeübertragungsmittel zur Übertragung von Wärme in das Treibstoffdurchleitungsmittel, wobei das Wärmeübertragungsmittel eine durch eine Wandung begrenzte Wärmemittelkammer zur Aufnahme eines Wärme abgebenden Wärmemittels aufweist, das Treibstoffdurchleitungsmittel zumindest abschnittsweise an der Wandung angeordnet ist, das Treibstoffdurchleitungsmittel und das Wärmeübertragungsmittel gemeinsam eine Flächenwärmetauscher-Anordnung bilden, das Treibstoffdurchleitungsmittel die Wärmemittelkammer im Wesentlichen umgibt und mindestens eine durch eine Wandung begrenzte Vorwärmkammer und eine nachgeschaltete Reaktorkammer aufweist und die Vorwärmkammer und die Reaktorkammer derart ausgerichtet sind, dass die Fließrichtung des Treibstoffes durch die Reaktorkammer zumindest teilweise etwa entgegengesetzt zu der Fließrichtung des Treibstoffes durch die Vorwärmkammer orientiert ist, die Reaktorkammer zumindest abschnittsweise zwischen der die Vorwärmkammer begrenzenden Wandung und der die Wärmemittelkammer begrenzenden Wandung gebildet ist.

Durch die erfindungsgemäße Verwendung einer Flächenwärmetauscherstruktur lässt sich der Treibstoff auf besonders einfache und schnelle und zugleich besonders wirkungsvolle Weise erwärmen, was zu einer wesentlichen Reduktion der Schadstoffemission in der Brennkraftmaschine führt. Insbesondere lässt sich mit der erfindungsmäßen Flächenwärmetauscherstruktur auf einfache und zugleich wirkungsvolle Weise eine lineare Erwärmung des Treibstoffes realisieren, was für die gewünschte Überführung des Treibstoffes in einen dünnflüssigeren Zustand von Vorteil ist und eine wesentlich bessere Zündfähigkeit des Treibstoffes in der Brennkammer der Brennkraftmaschine bewirkt.

Durch die mit Hilfe der Erfindung besonders wirkungsvoll zu erzielende Expansion des Treibstoffes, die leichte und schnelle Zündfähigkeit sowie die Zustandsänderung des Treibstoffes im Brennraum der Brennkraftmaschine mit der dadurch frei werdenden Energie sowie der daraus resultierenden hohen Energiedichte sind die hervorragenden Ergebnisse hinsichtlich Leistung und annähernd rückstandsloser Verbrennung erreichbar. Eine Abgasnachbehandlung ist in aller Regel nicht erforderlich.

Die erfindungsgemäße Vorwärmvorrichtung eignet sich sowohl für flüssige als auch gasförmige Treibstoffarten. Als flüssige Treibstoffe können sowohl Benzin als auch Diesel in Frage kommen. Die erfindungsgemäße Vorwärmvorrichtung kann auch an herkömmlichen Brennkraftmaschinen nachgerüstet werden, womit Treibstoffverbrauchsreduzierungen in einem erheblichen Ausmaß erzielt werden und der Schadstoffausstoß auf ein Minimum reduziert wird.

Bevorzugte Ausführungen und Weiterbildungen der Erfindung sind in den abhängigen Ansprüchen angegeben.

So ist vorzugsweise das Treibstoffdurchleitungsmittel mit einem Kupfer-Ionen in den Treibstoff abgebenden Werkstoff zu versehen. Denn es ist gefunden worden, dass sich Kupfer-Ionen als besonders wirkungsvoller Zündkatalysator eignen, was zu einer weiteren Erhöhung der Effizienz der Vorwärmvorrichtung beiträgt. Insbesondere im Temperaturbereich von etwa 50°C bis 60°C ist eine Ausdehnung des Treibstoffes um etwa 10% bei im Wesentlichen gleichbleibender Ladungsdichte zu beobachten. Bei einer Weiterbildung dieser Ausführung ist das Treibstoffdurchleitungsmittel durch eine Wandung begrenzt, welche zumindest abschnittsweise den Kupfer-Ionen abgebenden Werkstoff aufweist.

Unter einer Flächenwärmetauscher-Anordnung wird insbesondere eine Struktur verstanden, welche bei gegebener Querschnittsfläche bzw. gegebenem Volumen eine besonders große Fläche für den Wärmeübergang bietet.

Bevorzugt sollte das Treibstoffdurchleitungsmittel mindestens eine Kammer aufweisen, deren Breite quer zur Fließrichtung des Treibstoffes um ein Vielfaches größer als deren Höhe ist.

Zweckmäßigerweise sollten das Treibstoffdurchleitungsmittel und das Wärmeübertragungsmittel mindestens abschnittsweise unmittelbar benachbart zueinander angeordnet und nur durch eine Trennwand voneinander getrennt sein, um einen besonders effizienten Wärmeübergang zu erzielen.

Vorzugsweise ist die Wärmemitteikammer zur Durchleitung von fließfähigem Wärmemittel ausgebildet und das Treibstoffdurchleitungsmittelderart ausgebildet, dass es den Treibstoff zumindest abschnittsweise in einen, insbesondere etwa rechten, Winkel gegenüber der Fließrichtung des Wärmemittels führt. Alternativ ist es aber auch denkbar, in der Wärmemittelkammer mindestens ein, vorzugsweise elektrisches, Heizelement unterzubringen. Zweckmäßigerweise sollte die Wärmemittelkammer im Wesentlichen die Form eines Rohres haben. Dabei kann die mindestens eine Kammer des Treibstoffdurchleitungsmittels an der Außenwandung der Wärmemittelkammer so angeordnet sein, dass ihre Breite im Wesentlichen in Längsrichtung der Wärmemittelkammer definiert ist. Insbesondere kann hierbei die Höhe der mindestens einen Kammer des Treibstoffdurchleitungsmittels im Wesentlichen in radialer Richtung definiert sein.

Nachfolgend wird ein bevorzugtes Ausführungsbeispiel der Erfindung anhand der beiliegenden Zeichnungen näher erläutert. Es zeigen:
- Fig. 1: schematisch im Längsschnitt eine bevorzugte Ausführung der erfindungsgemäßen Vorwärmvorrichtung;
- Fig. 2: einen schematischen Querschnitt durch die Vorrichtung von Fig. 1;
- Fig. 3: eine schematische Draufsicht auf die innere Wand eines Rohres der Vorrichtung von Fig. 1;
- Fig. 4: eine erste ausschnittsweise schematische Detailansicht der Vorrichtung von Fig. 1;
- Fig. 5: eine zweite ausschnittsweise schematische Detailansicht der Vorrichtung von Fig. 1;
- Fig. 6: schematisch im Längsschnitt eine zweite bevorzugte Ausführung der erfindungsgemäßen Vorwärmvorrichtung; und
- Fig. 7: schematisch im Längsschnitt eine dritte bevorzugte Ausführung der erfindungsgemäßen Vorwärmvorrichtung.

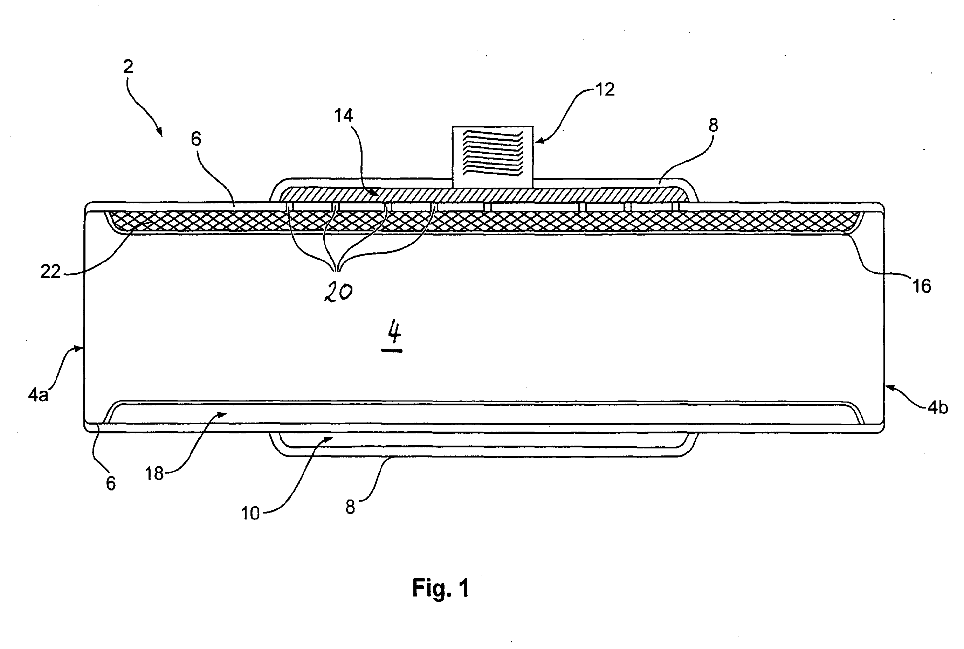

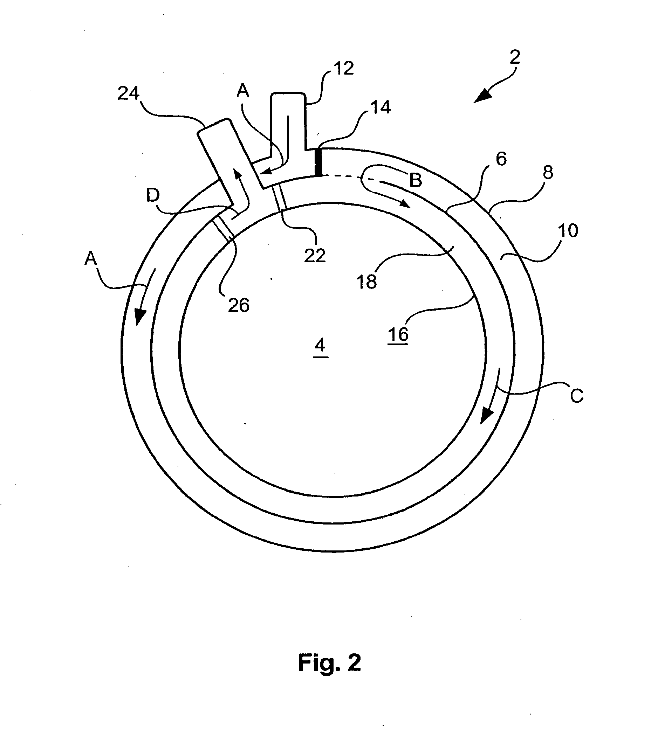

In den Figuren 1 bis 5 ist eine erste bevorzugte Ausführung 2 der erfindungsgemäßen Vorwärmvorrichtung dargestellt. Diese Ausführung 2 weist ein Rohr 4 auf, das von einer zylindrischen Wand 6 gebildet wird und an seinen beiden Stirnseiten 4a, 4b offen ist. An der Außenseite der Wand 6, welche nachfolgend als mittlere Wand bezeichnet wird, ist eine weitere Wand 8 ausgebildet, die das Rohr 4 umschließt und nachfolgend als äußere Wand bezeichnet wird. Wie insbesondere Fig. 1 erkennen lässt, ist der größte Teil der äußeren Wand 8 in einem Abstand von der mittleren Wand 6 des Rohres 4 angeordnet, während die äußere Wand 8 mit ihren Seitenrändern an der Außenseite der mittleren Wand 6, beispielsweise durch Löten, dichtend befestigt ist. Dadurch wird eine Kammer 10 gebildet, die durch die Wände 6, 8 begrenzt ist. Bei dieser Kammer 10 handelt es sich um eine sog. Vorwärmkammer, deren Funktion im Laufe der nachfolgenden Beschreibung noch näher erläutert wird. Da die äußere Wand 8 das Rohr 4 in Umfangsrichtung vollständig umschließt, hat die Vorwärmkammer 10 im Querschnitt eine Ringform und verläuft in Umfangsrichtung um das Rohr 4 herum, wie insbesondere Fig. 2 erkennen lässt. Fig. 1 lässt ferner erkennen, dass die Vorwärmkammer eine Breite hat, die in Längsrichtung des Rohres 4 definiert ist und um ein Vielfaches größer als die Höhe in radialer Richtung ist. Dadurch erhält die Vorwärmkammer 10 eine breite, jedoch flache Querschnittsfläche und ist sozusagen schlitzförmig gebildet. Ferner ist ein Einlassstutzen 12 radial angeordnet, der mit der Vorwärmkammer 10 kommuniziert. Benachbart zum Einlassstutzen 12 ist in der Vorwärmkammer 10 eine Trennwand 14 angeordnet, die sich in axialer Richtung bzw. Längsrichtung des Rohres 4 erstreckt, an den, In Bezug auf die Vorwärmkammer betrachtet, innen liegenden Flächen der Wände 6, 8 dichtend befestigt ist und somit die Vorwärmkammer 10 in axialer Richtung unterteilt, wie die Figuren 1, 2 und 4 erkennen lassen. Zur besseren Erkennbarkeit ist die Trennwand 14 in Fig. 1 mit einer einfachen Schraffur gekennzeichnet.

An der, in Bezug auf das Rohr 4 betrachtet, innen liegenden Fläche der mittleren Wand 6 ist eine weitere Wand 16 ausgebildet, die nachfolgend als innere Wand bezeichnet wird, zum größten Teil in einem Abstand von der mittleren Wand 6 verläuft und mit ihren Seitenrändern, beispielsweise durch Löten, dichtend an der Innenfläche der mittleren Wand 6 befestigt ist. Wie die Figuren 1 und 2 erkennen lassen, wird zwischen den Wänden 6 und 16 eine weitere Kammer gebildet, bei der es sich um eine so genannte Reaktorkammer 18 handelt. Ähnlich wie die Vorwärmkammer 10 weist auch die Reaktorkammer 18 eine in Längsrichtung des Rohres 4 breite, jedoch in radialer Richtung niedrige Querschnittsöffnung auf, d.h. beträgt die Höhe der Reaktorkammer 18 in radialer Richtung nur einen Bruchteil der in Längsrichtung bzw. axialer Richtung des Rohres 4 definierten Breite, wie Fig. 1 erkennen lässt.

Aufgrund der zuvor beschriebenen Anordnung sind die Vorwärmkammer 10 und die Reaktorkammer 18 konzentrisch zueinander angeordnet, so dass ähnlich wie die Vorwärmkammer 10 auch die Reaktorkammer 18, im Querschnitt des Rohres 4 gemäß Fig. 2 betrachtet, ringförmig ausgebildet ist.

Im dargestellten Ausführungsbeispiel erstreckt sich die Reaktorkammer 18 in ihrer Breite im Wesentlichen über die gesamte Länge des Rohres 4, während die Vorwärmkammer 10 sich in ihrer Breite nur über einen Teil der Länge des Rohres 4 erstreckt und in Bezug auf das Rohr 4 und die Reaktorkammer 18 mittig angeordnet ist. Grundsätzlich ist es beispielsweise aber auch denkbar, die Vorwärmkammer 10 im Wesentlichen über die gesamte Länge des Rohres 4 auszubilden oder die Reaktorkammer 18 in ihrer Breite an die der Vorwärmkammer 10 entsprechend anzupassen.

Die Vorwärmkammer 10 und die Reaktorkammer 18 sind über Düsenöffnungen 20 miteinander verbunden, die in demjenigen Abschnitt der mittleren Wand 6 ausgebildet sind, welcher eine gemeinsame Trennwand zwischen der Vorwärmkammer 10 und der Reaktorkammer 18 bildet, wo also die Vorwärmkammer 10 unmittelbar benachbart zur Reaktorkammer 18 liegt und somit diese überlappt.

Ähnlich wie in der Vorwärmkammer 10 ist auch in der Reaktorkammer 18 eine Trennwand 22 ausgebildet, die sich über die gesamte in axialer Richtung bzw. Längsrichtung des Rohres 4 definierte Breite erstreckt und an den zur Reaktorkammer 18 weisenden Flächen der Wände 6, 16, insbesondere durch Löten, dichtend befestigt ist und somit die Reaktorkammer 18 entsprechend unterteilt, wie insbesondere in den Figuren 1 bis 3 zu erkennen ist. Zur besseren Erkennbarkeit ist in Fig. 1 die Trennwand 22 durch eine kreuzweise Schraffur gekennzeichnet.

Ähnlich wie die Vorwärmkammer 10 mit einem Einlassstutzen 12 verbunden ist, kommuniziert die Reaktorkammer 18 mit einem Auslassstutzen 24, der ähnlich wie der Einlassstutzen 12 radial ausgerichtet, und in, Umfangsrichtung betrachtet, benachbart zum Einlassstutzen 12 angeordnet und deshalb in der Perspektive von Fig. 1 hinter dem Einlassstutzen 12 verdeckt, jedoch in den Figuren 2, 3 und 5 erkennbar ist.

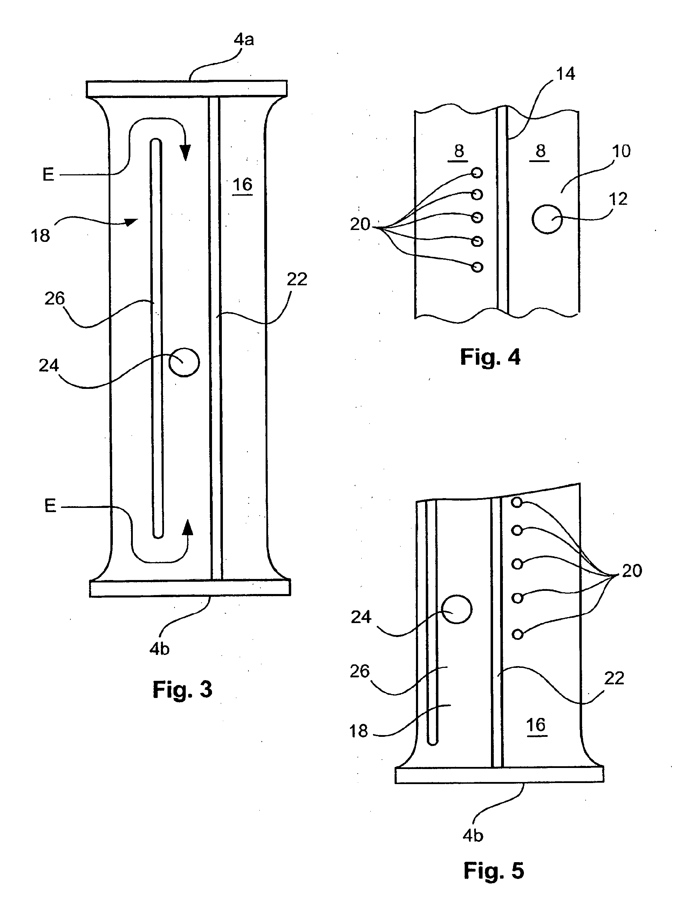

Wie insbesondere die Figuren 3 und 5 ferner erkennen lassen, ist in der Reaktorkammer 18 noch ein so genanntes Leitblech 26 vorgesehen, das sich im Wesentlichen parallel zur Trennwand 22 erstreckt und sowohl an der mittleren Wand 6 als auch an der inneren Wand 16, insbesondere durch Löten, befestigt ist. Das Leitblech 26 ist mit seinen beiden Enden beabstandet von den Seiten der Reaktorkammer 18 und hat somit eine geringere Länge als die Trennwand 22, wodurch an beiden Enden des Leitbleches 26 jeweils ein Durchlass in der Reaktorkammer 18 verbleibt, wie Fig. 3 erkennen lässt. Wie ferner insbesondere die Figuren 2, 3 und 5 erkennen lassen, liegt der Auslassstutzen 24 zwischen der Trennwand 22 und dem Leitblech 26. Während der Auslassstutzen 24 benachbart zu der einen Seite der Trennwand 22 angeordnet ist, liegt der Einlassstutzen 12 in Bezug auf die Trennwand 22 benachbart zu deren anderen Seite und somit innerhalb eines Winkelbereiches, der jeweils von einer der beiden Trennwände 14, 22 begrenzt wird, wie Fig. 2 erkennen lässt.

Der Auslassstutzen 24 ist dichtend durch die Wand 8 hindurch geführt, erstreckt sich radial durch die Vorwärmkammer 10 und endet in der Wand 6, wodurch der Auslassstutzen 24 nur in fluider Verbindung mit der Reaktorkammer 18 steht.

Im dargestellten Ausführungsbeispiel besteht die gesamte Vorrichtung aus Metall, wobei mindestens eine der Wände 6, 8 und 16 eine Kupferlegierung aufweist, die in der Lage ist, Kupfer-Ionen in ein Fluid abzugeben; hierzu kommt bevorzugt die mittlere Wand 6 zumindest in demjenigen Abschnitt in Frage, der als Trennwand zwischen der Vorwärmkammer 10 und der Reaktorkammer 18 dient, da somit in diesem Abschnitt Kupfer-Ionen zu beiden Selten der Wand 6 und somit sowohl in die Vorwärmkammer 10 als auch in die Reaktorkammer 18 abgegeben werden können.

Der Einlassstutzen 12 und der Auslassstutzen 24 sind für den Einlass bzw. Auslass von Treibstoff vorgesehen und bevorzugt in Industrienorm ausgeführt. Verwendet werden kann die dargestellte Vorrichtung sowohl für flüssigen Treibstoff wie Benzin oder Diesel als auch für gasförmigen Treibstoff. Die Vorrichtung wird mit ihrem Einlassstutzen 12 und ihrem Auslassstutzen 24 in einer zum Brennraum einer (in den Figuren nicht dargestellten) Brennkraftmaschine installiert. Die Installation der Vorrichtung kann sowohl als Neuinstallation als auch als Nachrüstung an bestehenden Brennkraftmaschinen vorgenommen werden.

Nachfolgend wird die Betriebsweise der zuvor beschriebenen Vorrichtung näher erläutert.

Der Hohlraum des Rohres 4 dient zur Durchleitung eines flüssigen oder gasförmigen Heizmediums, welches an einer entfernten Stelle durch eine (in den Figuren nicht dargestellte) Heizvorrichtung erhitzt und auf eine gewünschte Temperatur gebracht wird. Während der Durchleitung durch das Rohr 4 gibt das Heizmedium seine Wärme über die innere Wand 16 in die Reaktorkammer 18 ab. Als flüssiges Heizmedium eignet sich beispielsweise erhitztes Kühlwasser, so dass die Vorrichtung mit dem Rohr 4 im Rücklauf des Kühlwassersystems einer Brennkraftmaschine installiert werden kann. Grundsätzlich ist aber auch die Verwendung anderer Arten von Heizmitteln oder Heizvorrichtungen denkbar, sofern sie im Rohr 4 in der dargestellten Ausführung der Vorwärmvorrichtung aufgenommen oder untergebracht werden können. Beispielsweise ist es auch denkbar, elektrische Heizstäbe innerhalb des Rohres 4 anzuordnen, welche an eine externe Stromquelle angeschlossen werden und die Hitze über die innere Wand 16 in den Reaktorraum 18 abgeben. Auf jeden Fall bildet das Rohr 4 ein Wärmeübertragungsmittel zur Übertragung von Wärme bzw. Hitze in die benachbarte Reaktorkammer 18.

Nach Eintritt durch den Einlassstutzen 12 gelangt der Treibstoff zunächst in die Vorwärmkammer 10, die ja als äußere Kammer ausgebildet ist, und fließt in Richtung des in Fig. 2 gezeigten Pfeils A in Umfangsrichtung des Rohres 4 (gemäß der Darstellung von Fig. 2 entgegen dem Uhrzeigersinn), bis der Treibstoff nach einer fast vollständigen Umrundung die Düsenöffnungen 20 erreicht. Die Fließrichtung gemäß Pfeil A durch die ringförmige Vorwärmkammer 10 wird durch die Trennwand 14 bestimmt, die zwischen dem Einlassstutzen 12 und den Düsenöffnungen 20 liegt, wobei der Einlassstutzen 12 im Wesentlichen direkt benachbart zu der einen (gemäß Fig. 2 linken) Seite der Trennwand 14 angeordnet ist, wo der stromaufwärtige Anfangsbereich der Vorwärmkammer 10 gebildet ist, und die Düsenöffnungen 20 direkt benachbart zu der gegenüberliegenden, anderen (gemäß Fig. 2 rechten) Seite der Trennwand 14 vorgesehen sind und somit im stromabwärtsseitigen Ende der Vorwärmkammer 10 liegen.

Wie durch den Pfeil B in Fig. 2 angedeutet ist, tritt durch die Düsenöffnungen 20 in der mittleren Wand 6 der Treibstoff in die Reaktorkammer 18 ein, die als innere Kammer direkt benachbart zu dem sich im Rohr 4 befindlichen Heizmedium liegt. Die Fließrichtung durch die Reaktorkammer 18 ist im dargestellten Ausführungsbeispiel nun entgegengesetzt zu der Fließrichtung durch die Vorwärmkammer 10, so dass der flüssige Treibstoff durch die Reaktorkammer 18 in der Darstellung von Fig. 2 im Uhrzeigersinn durch die Reaktorkammer 18 fließt, wie in Fig. 2 durch den Pfeil C angedeutet ist. Nachdem der Treibstoff vollständig durch die Reaktorkammer 18 geflossen ist und dabei eine fast vollständige Umrundung um das Rohr 4 ausgeführt hat, verlässt der Treibstoff die Reaktorkammer 18 über den Auslassstutzen 24, wie durch den Pfeil D in Fig. 2 erkennbar ist. Ähnlich wie durch die Trennwand 14 in der Vorwärmkammer 10 wird die Fließrichtung des Treibstoffes in Richtung des Pfeils C durch die Reaktorkammer 18 von der besonderen Anordnung der Trennwand 22 bestimmt. Die Trennwand 22 liegt nämlich zwischen dem die Düsenöffnungen 20 aufweisenden Bereich, der den stromaufwärtsseitigen Anfangsbereich der Reaktorkammer 18 bildet, und dem Auslassstutzen 24, der mit dem stromabwärtsseitigen Ende der Reaktorkammer 18 kommuniziert, wie Fig. 2 erkennen lässt.

Vor Eintritt in den Auslassstutzen 24 trifft der Treibstoff noch auf das Leitblech 26, welches vom Treibstoff an seinen beiden Enden umströmt werden muss, bevor es den Auslassstutzen 24 erreicht, was durch Pfeile E in Fig. 3 angedeutet ist. Das Leitblech 26 dient als eine Art Barriere oder Prallblech, wodurch bewirkt wird, dass im Bereich des stromabwärtsseitigen Endes kein sich auf den Auslassstutzen 24 verjüngender Strömungspfad entsteht, sondern die Reaktorkammer 18 bis zu ihrem stromabwärtsseitigen Ende im Wesentlichen vollständig mit Treibstoff gefüllt bleibt.

Demnach bilden die Vorwärmkammer 10 und die stromabwärts nachgeschaltete Reaktorkammer 18 gemeinsam ein Treibstoffdurchleitungsmittel zum Durchleiten des durch den Einlassstutzen 12 eintretenden Treibstoffes zum Auslassstutzen 24.

Wie bereits zuvor erwähnt, wird von dem im Rohr 4 befindlichen bzw. durch das Rohr 4 fließenden Heizmedium die Wärme über die innere Wand 16 in die Reaktorkammer 18 übertragen. Allerdings gelangt ein Teil der Wärme von der Reaktorkammer 18 über die mittlere Wand 6 weiter in die Vorwärmkammer 10. Da die Reaktorkammer 18 in unmittelbarer Nachbarschaft zu dem im Rohr 4 befindlichen Heizmedium liegt, während die Vorwärmkammer 10 durch die Reaktorkammer 18 einen größeren Abstand zu dem im Rohr 4 befindlichen Heizmedium aufweist und nur einen Teil der vom Heizmedium im Rohr 4 erzeugten Wärme aus der Reaktorkammer 18 erhält, wird die Reaktorkammer 18 stärker erhitzt als die Vorwärmkammer 10. Dies hat zur Folge, dass nach Eintritt in den Einlassstutzen 12 der Treibstoff in der Vorwärmkammer 10 zunächst nur auf einen Zwischenwert und anschließend in der stromabwärts nachgeschalteten Reaktorkammer 18 auf den endgültigen Wert erhitzt wird. Dabei sorgt die gegenüber der Strömungsrichtung in der Vorwärmkammer gemäß Pfeil A gegenläufige Strömungsrichtung in der Reaktorkammer 18 gemäß Pfeil C für eine besonders effiziente Wärmeübertragung aus der Reaktorkammer 18 in die außen liegende Vorwärmkammer 10 und somit für eine besonders effiziente Erwärmung des zunächst durch die Vorwärmkammer 10 und anschließend durch die Reaktorkammer 18 strömenden Treibstoffes.

Während der Treibstoff die Vorwärmkammer 10 und die Reaktorkammer 18 durchströmt, werden von den mit einer Kupferlegierung versehenen Flächen der Wände Kupfer-Ionen in den vorbeifließenden Treibstoff abgegeben, welche sich als besonders wirkungsvoller Zündkatalysator herausgestellt haben, was zu einer weiteren Erhöhung der Effizienz der Vorwärmvorrichtung beiträgt.

Wie insbesondere Fig. 1 erkennen lässt, bilden die Vorwärmkammer 10 und die Reaktorkammer 18 zusammen mit der den Hohlraum des Rohres 4 begrenzenden inneren Wand 16 eine so genannte Flächenwärmetauscher-Anordnung, wodurch sich der Wärmeübergang besonders effizient realisieren lässt.

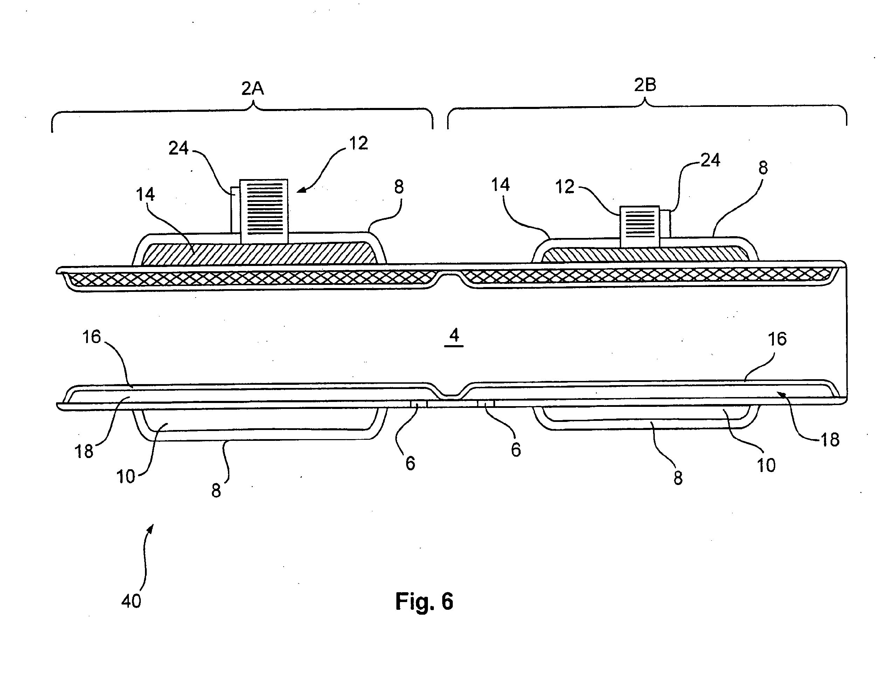

Die zuvor anhand der Figuren 1 bis 5 beschriebene Vorrichtung eignet sich grundsätzlich auch für die Installation bei Brennkraftmaschinen, die wahlweise sowohl mit gasförmigem Treibstoff als auch mit flüssigem Treibstoff wie Diesel oder Benzin betrieben werden können. Für einen solchen Anwendungsfall werden aber zwei Vorrichtungen der in den Figuren 1 bis 5 gezeigten Art benötigt, welche hintereinander geschaltet werden. Eine solche zweite Ausführung 40 ist schematisch im Längsschnitt in Fig. 6 gezeigt. Ein Vergleich mit Fig. 1 lässt erkennen, dass die zweite Ausführung 40 aus einer Hintereinanderschaltung von zwei Vorrichtungen gemäß der in den Figuren 1 bis 5 gezeigten ersten Ausführung 2 besteht. In Fig. 6 ist von der dort dargestellten zweiten Ausführung 40 ein erster Abschnitt mit dem Bezugszeichen "2A" und ein zweiter Abschnitt mit dem Bezugszeichen "2B" gekennzeichnet. Jeder dieser beiden Abschnitte 2A, 2B besteht für sich genommen aus einer Vorrichtung, wie sie als erste Ausführung 2 in den Figuren 1 bis 5 gezeigt ist. Deshalb wird aus Gründen der einfacheren Darstellung in Fig. 6 für jeden der beiden Abschnitte 2A, 2B die gleichen Bezugszeichen für die gleichen Bauteile wie bei der ersten Ausführung 2 gemäß den Figuren 1 bis 5 verwendet. Ein solcher Aufbau hat zur Folge, dass für den gasförmigen Treibstoff und für den flüssigen Treibstoff die getrennten Strömungswege aufrechterhalten bleiben, was dem Umstand Rechnung trägt, dass sowohl für den gasförmigen Treibstoff als auch für den flüssigen Treibstoff jeweils ein eigenständiges Treibstoffsystem an der Brennkraftmaschine vorhanden ist. Demgegenüber ist der Aufbau der in Fig. 6 gezeigten zweiten Ausführung 40 von Vorteil darin, dass für die Aufnahme bzw. Durchleitung des Heizmediums durch die Hintereinanderschaltung der Rohre 4 ein gemeinsamer durchgängiger Hohlraum geschaffen wird.

Wie Fig. 6 ferner erkennen lässt, ist die Querschnittsfläche der Vorwärmkammer 10 und der Reaktorkammer 18 im ersten Abschnitt 2A größer als im zweiten Abschnitt 2B, was sich auch entsprechend auf das Volumen der Kammern auswirkt. Dieser Unterschied hängt mit der Verwendung der unterschiedlichen Treibstoffarten zusammen. Der erste Abschnitt 2A mit den großvolumigeren Vorwärm- und Reaktorkammern 10, 18 ist für die Verarbeitung von gasförmigem Treibstoff vorgesehen, während im Abschnitt 2B mit den kleinvolumigeren Vorwärm- und Reaktorkammern 10, 18 flüssiger Treibstoff wie beispielsweise Diesel vorgewärmt wird.

Des Weiteren ist es bei der zweiten Ausführung 40 gemäß Fig. 6 denkbar, die Anordnung so zu treffen, dass die Fließrichtung des gasförmigen Treibstoffes durch den ersten Abschnitt 2A entgegengesetzt zu der Fließrichtung des flüssigen Treibstoffes durch den zweiten Abschnitt 2B orientiert ist.

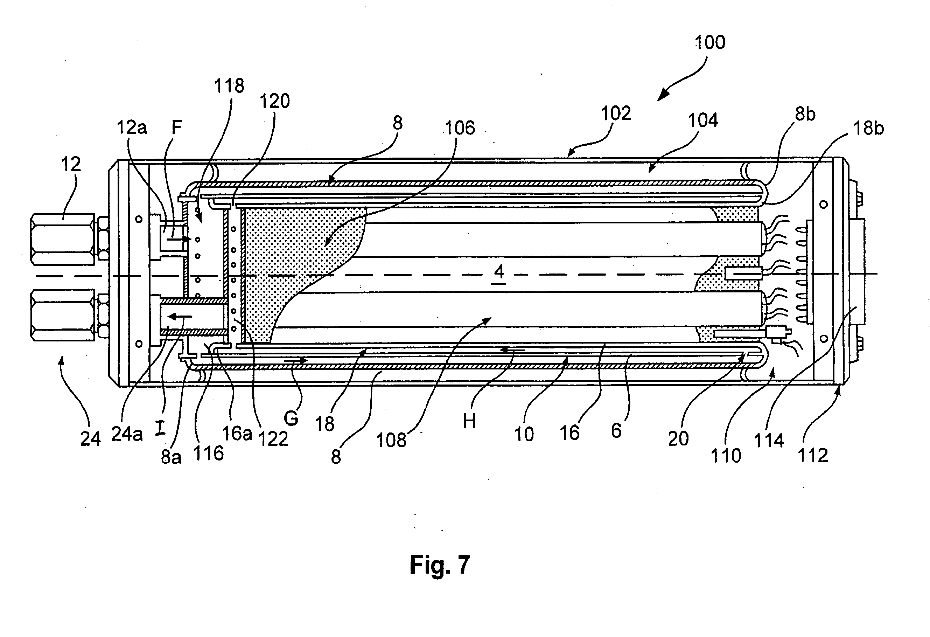

In Fig. 7 ist schematisch im Längsschnitt eine dritte Ausführung 100 gezeigt, welche die gleiche Wärmetauscherwirkung hat wie die erste Ausführung 2 und die zweite Ausführung 40, sich jedoch im Aufbau an einigen Stellen unterscheidet. Aus Gründen der Einfachheit werden in Fig. 7 für diejenigen Bauteile, die bereits in der Vorrichtung gemäß der ersten Ausführung 2 enthalten sind, die gleichen Bezugszeichen verwendet.

Wie ein Vergleich der Fig. 7 mit Fig. 1 erkennen lässt, unterscheidet sich die dritte Ausführung 100 von der ersten Ausführung 2 durch die Ausbildung eines rohrförmigen Gehäuses 102, in das das Rohr 4 aufgenommen ist. Die zylindrische Wandung des rohrförmigen Gehäuses 102 besteht vorzugsweise aus Aluminium. Der zwischen der Wandung des rohrförmigen Gehäuses 102 und der äußeren Wand 8 des Rohres 4 entstehende Zwischenraum wird durch Glaswolle 104 ausgefüllt. In dem von der inneren Wand 16 begrenzten Hohlraum des Rohres 4 ist ein Heizkörper 106 angeordnet, der mehrere sich in axialer Richtung bzw. Längsrichtung des Rohres 4 bzw. des rohrförmigen Gehäuses 102 erstreckende und parallel und beabstandet voneinander liegende elektrische Heizstäbe 108 enthält. Der Innenraum 110 des rohrförmigen Gehäuses 102 ist durch einen Deckel 112 verschlossen, in dem ein Steckverbinder 114 ausgebildet ist, welcher im Innenraum 110 des rohrförmigen Gehäuses 102 an die elektrischen Heizstäbe 108 angeschlossen und an der Außenseite zur Aufnahme eines Steckers für den Anschluss an eine nicht dargestellte Spannungsquelle vorgesehen ist.

Der Einlassstutzen 12 kommuniziert mit seinem internen offenen Ende 12a mit einem Vorraum 116, der über einen Düsenkranz 118 mit der Vorwärmkammer 10 verbunden ist, welche zwischen der äußeren Wand 8 und der mittleren Wand 6 liegt und das Rohr 4 umgibt. Während der Düsenkranz 118 am stromaufwärtsseitigen (gemäß der Darstellung von Fig. 7 linken) Anfangsbereich der Vorwärmkammer 10 gebildet ist, finden sich am gegenüberliegenden, stromabwärtsseitigen (gemäß der Darstellung von Fig. 7 rechten) Ende die Düsenöffnungen 20, die das stromabwärtsseitige Ende der Vorwärmkammer 10 mit dem stromaufwärtsseitigen Anfangsbereich der (gemäß der Darstellung von Fig. 7 rechten) Reaktorkammer 18 verbindet. Das gegenüberliegende stromabwärtsseitige (gemäß der Darstellung von Fig. 7 linke) Ende der Reaktorkammer 18 ist über einen Düsenkranz 120 mit einem Raum 122 verbunden, der mit dem offenen Ende 24a des Auslassstutzens 24 kommuniziert. Wie Fig. 7 erkennen lässt, fehlen bei dieser Ausführung die in der ersten Ausführung vorhandenen Trennwände und das Leitblech. Deren Aufgaben werden in der dritten Ausführung gemäß Fig. 7 durch die rechten und linken Seitenwandabschnitte 8a, 8b der äußeren Wand 8 und durch die benachbart hierzu befindlichen rechten und linken Seitenwandabschnitte 16a, 16b der inneren Wand 16 übernommen, durch welche die Vorwärmkammer 10 und die Reaktorkammer 18 entlang ihrer Seitenränder abgeschlossen sind.

Demnach tritt der Treibstoff durch den Einlassstutzen 12 in Richtung des Pfeils F in den Vorraum 116 ein und fließt von dort durch den Düsenkranz 118 in die Vorwärmkammer 10 in Richtung des Pfeils G. An dem gegenüberliegenden, stromaufwärtsseitigen Ende der Vorwärmkammer 10 tritt der Treibstoff durch die Düsenöffnungen 20 in die Reaktorkammer 18 ein und fließt von dort zurück in Richtung des Pfeils H, um dann am gegenüberliegenden, stromabwärtsseitigen Ende durch den Düsenkranz 120 in den Raum 122 einzutreten, von dem der Treibstoff in Richtung des Pfeils I über den Auslassstutzen 24 die Vorrichtung verlässt. Dabei ist die Erwärmungsfunktion die gleiche wie die der ersten Ausführung 2, so dass zur Vermeidung von Wiederholungen auf die diesbezügliche Beschreibung der ersten Ausführung verwiesen wird.

Im Gegensatz zur ersten Ausführung 2 findet bei der dritten Ausführung 100 gemäß Fig. 7 die Erwärmung nicht durch ein durchströmendes Heizmedium statt, sondern mithilfe einer elektrisch arbeitenden Heizung, die stationär im Rohr 4 angeordnet ist. Hierfür sind nicht nur die notwendigen elektrischen Anschlüsse vonnöten, sondern ist auch die Verwendung von Thermosicherungen und Thermostaten zu empfehlen, was in Fig. 7 jedoch im Einzelnen nicht näher bezeichnet ist.

## Patentansprüche

1. Vorwärmvorrichtung zum Vorwärmen von flüssigem und/oder gasförmigem Treibstoff für eine Brennkraftmaschine,
mit einem Treibstoffeinlass (12), einem Treibstoffauslass (24), einem den Treibstoffeinlass (12) mit dem Treibstoffauslass (24) verbindenden Treibstoffdurchleitungsmittel (10, 18) zum Durchleiten des durch den Treibstoffeinlass (12) eintretenden Treibstoffes zum Treibstoffauslass (24) und einem Wärmeübertragungsmittel (4, 16) zur Übertragung von Wärme in das Treibstoffdurchleitungsmittel (10, 18),
wobei das Wärmeübertragungsmittel eine durch eine Wandung (16) begrenzte Wärmemittelkammer (4) zur Aufnahme eines Wärme abgebenden Wärmemittels aufweist,
das Treibstoffdurchleitungsmittel zumindest abschnittsweise an der Wandung (16) angeordnet ist,
das Treibstoffdurchleitungsmittel (10, 18) und das Wärmeübertragungsmittel (4, 16) gemeinsam eine Flächenwärmetauscher-Anordnung bilden,
das Treibstoffdurchleitungsmittel (10, 18) die Wärmemittelkammer (4) im Wesentlichen umgibt und mindestens eine durch eine Wandung (6) begrenzte Vorwärmkammer (10) und eine nachgeschaltete Reaktorkammer (18) aufweist und
die Vorwärmkammer (10) und die Reaktorkammer (18) derart ausgerichtet sind, dass die Fließrichtung des Treibstoffes durch die Reaktorkammer (18) zumindest teilweise etwa entgegengesetzt zu der Fließrichtung des Treibstoffes durch die Vorwärmkammer (10) orientiert ist,
**dadurch gekennzeichnet, dass**
die Reaktorkammer (18) zumindest abschnittsweise zwischen der die Vorwärmkammer (10) begrenzenden Wandung (6) und der die Wärmemittelkammer (4) begrenzenden Wandung (16) gebildet ist.

2. Vorrichtung nach Anspruch 1,
**dadurch gekennzeichnet, dass** das Treibstoffdurchleitungsmittel (10, 18) einen Kupfer-Ionen in den Treibstoff abgebenden Werkstoff aufweist.

3. Vorrichtung nach Anspruch 2,
**dadurch gekennzeichnet, dass** das Treibstoffdurchleitungsmittel (10, 18) durch eine Wandung (6) begrenzt ist, welche zumindest abschnittsweise den Kupfer-Ionen abgebenden Werkstoff aufweist.

4. Vorrichtung nach mindestens einem der vorangegangenen Ansprüche,
**dadurch gekennzeichnet, dass** das Treibstoffdurchleitungsmittel mindestens eine Kammer (10; 18) aufweist, deren Breite quer zur Fließrichtung des Treibstoffes um ein Vielfaches größer als deren Höhe ist.

5. Vorrichtung nach Anspruch 4,
**dadurch gekennzeichnet, dass** die mindestens eine Kammer (10; 18) des Treibstoffdurchleitungsmittels an der Wandung (16) der Wärmemittelkammer (4) so angeordnet ist, dass ihre Breite im Wesentlichen in Längsrichtung der Wärmemittelkammer (4) definiert ist.

6. Vorrichtung nach mindestens einem der vorangegangen Ansprüche,
**dadurch gekennzeichnet, dass** das Treibstoffdurchleitungsmittel (10, 18) und das Wärmeübertragungsmittel (4, 16) mindestens abschnittsweise unmittelbar benachbart zueinander angeordnet und durch eine Trennwand (16) voneinander getrennt sind.

7. Vorrichtung nach mindestens einem der vorangegangenen Ansprüche,
**dadurch gekennzeichnet, dass** die Wärmemittelkammer (4) zur Durchleitung von fließfähigem Wärmemittel ausgebildet ist und das Treibstoffdurchleitungsmittel (10, 18) derart ausgebildet ist, dass es den Treibstoff zumindest abschnittsweise in einem, bevorzugten etwa rechten, Winkel gegenüber der Fließrichtung des Wärmemittels führt.

8. Vorrichtung nach mindestens einem der vorangegangenen Ansprüche,
**dadurch gekennzeichnet, dass** die Wärmemittelkammer (4) zur Aufnahme mindestens eines, vorzugsweise elektrischen, Heizelementes (108) ausgebildet ist.

9. Vorrichtung nach mindestens einem der vorangegangenen Ansprüche,
**dadurch gekennzeichnet, dass** die Wärmemittelkammer (4) im Wesentlichen die Form eines Rohres hat.

10. Vorrichtung nach den Ansprüchen 5 und 9,
**dadurch gekennzeichnet, dass** die Höhe der mindestens einen Kammer (10; 18) des Treibstoffdurchleitungsmittels im Wesentlichen in radialer Richtung definiert ist.

## Claims

1. Preheating device for preheating liquid and/or gaseous fuel for an internal question engine, with a fuel inlet (12), a fuel outlet (24), a fuel conducting means (10, 18) connecting the fuel inlet (12) to the fuel outlet (24) to conduct the fuel entering through the fuel inlet (12) to the fuel outlet (24) and a heat transmission means (4, 16) to transmit heat into the fuel conducting means (10, 18), wherein the heat transmission means has a heating means chamber (4) limited by a wall (16) to receive a heat-emitting heating means, the fuel conducting means is arranged at least in portions on the wall (16), the fuel conducting means (10, 18) and the heat transmission means (4, 16) together form a planar heat exchanger arrangement, the fuel conducting means (10, 18) substantially surrounds the heating means chamber (4) and has at least one preheating chamber (10) limited by a wall (6) and a downstream reactor chamber (18) and the preheating chamber (10) and the reactor chamber (18) are oriented in such a way that the flow direction of the fuel through the reactor chamber (18) is at least partially oriented approximately in the opposite direction to the flow direction of the fuel through the preheating chamber (10), **characterised in that** the reactor chamber (18) is formed at least in portions between the wall (6) limiting the preheating chamber (10) and the wall (16) limiting the heating means chamber (4).

2. Device according to claim 1, **characterised in that** the fuel conducting means (10,18) has a material discharging copper ions into the fuel.

3. Device according to claim 2, **characterised in that** the fuel conducting means (10, 18) is limited by a wall (6), which at least in portions has the material discharging copper ions.

4. Device according to at least any one of the preceding claims, **characterised in that** the fuel conduction means has at least one chamber (10; 18), the width of which transverse to the flow direction of the fuel is many times greater than its height.

5. Device according to claim 4, **characterised in that** the at least one chamber (10; 18) of the fuel conducting means is arranged on the wall (16) of the heating means chamber (4) in such a way that its width is substantially defined in the longitudinal direction of the heating means chamber (4).

6. Device according to at least any one of the preceding claims, **characterised in that** the fuel conducting means (10, 18) and the heat transmission means (4, 16) are arranged at least in portions directly adjacent to one another and are separated from one another by a partition (16).

7. Device according to at least any one of the preceding claims, **characterised in that** the heating means chamber (4) is configured to conduct flowable heating means and the fuel conducting means (10, 18) is configured in such a way that it guides the fuel at least in portions at an angle, preferably approximately a right angle, in relation to the flow direction of the heating means.

8. Device according to at least any one of the preceding claims, **characterised in that** the heating means chamber (4) is configured to receive at least one, preferably electric, heating element (108).

9. Device according to at least any one of the preceding claims, **characterised in that** the heating means chamber (4) substantially has the form of a tube.

10. Device according to claims 5 and 9, **characterised in that** the height of the at least one chamber (10; 18) of the fuel conducting means is substantially defined in the radial direction.

## Revendications

1. Dispositif de préchauffage destiné à préchauffer du carburant à l'état liquide et/ou gazeux pour un moteur à combustion interne,
avec une entrée de carburant (12), une sortie de carburant (24), un moyen de passage de carburant (10, 18) reliant l'entrée de carburant (12) à la sortie de carburant (24) pour le passage du carburant entrant par l'entrée de carburant (12) vers la sortie de carburant (24) et un moyen de transmission de chaleur (4, 16) pour la transmission de chaleur dans le moyen de passage de carburant (10, 18),
le moyen de passage de chaleur présentant une chambre de fluide caloporteur (4) délimitée par une paroi (16) pour la réception d'un fluide caloporteur émettant de la chaleur,
le moyen de passage de carburant étant agencé au moins par section sur la paroi (16),
le moyen de passage de carburant (10, 18) et le moyen de transmission de chaleur (4, 16) formant ensemble un agencement d'échangeur de chaleur de surface,
le moyen de passage de carburant (10, 18) entourant sensiblement la chambre de fluide caloporteur (4) et présentant au moins une chambre de préchauffage (10) délimitée par une paroi (6) et une chambre de réacteur (18) montée en aval et
la chambre de préchauffage (10) et la chambre de réacteur (18) étant orientées de telle manière que le sens d'écoulement du carburant par la chambre de réacteur (18) soit orienté au moins en partie à peu près à l'opposé du sens d'écoulement du carburant par la chambre de préchauffage (10),
**caractérisé en ce que**
la chambre de réacteur (18) est formée au moins par section entre la paroi (6) délimitant la chambre de préchauffage (10) et la paroi (16) délimitant la chambre de fluide caloporteur (4).

2. Dispositif selon la revendication 1,
**caractérisé en ce que** le moyen de passage de carburant (10, 18) présente un matériau émettant des ions de cuivre dans le carburant.

3. Dispositif selon la revendication 2,
**caractérisé en ce que** le moyen de passage de carburant (10, 18) est délimité par une paroi (6) qui présente au moins par section le matériau émettant des ions de cuivre.

4. Dispositif selon au moins l'une quelconque des revendications précédentes,
**caractérisé en ce que** le moyen de passage de carburant présente au moins une chambre (10 ; 18), dont la largeur transversalement au sens d'écoulement du carburant est plus grande que sa hauteur d'un multiple.

5. Dispositif selon la revendication 4,
**caractérisé en ce que** l'au moins une chambre (10 ; 18) du moyen de passage de carburant est agencée sur la paroi (16) de la chambre de fluide caloporteur (4) de sorte que sa largeur soit définie sensiblement dans le sens longitudinal de la chambre de moyen de passage (4).

6. Dispositif selon au moins l'une quelconque des revendications précédentes,
**caractérisé en ce que** le moyen de passage de carburant (10, 18) et le moyen de transmission de chaleur (4, 16) sont agencés au moins par section de manière directement contiguë et sont séparés l'un de l'autre par une paroi de séparation (16).

7. Dispositif selon au moins l'une quelconque des revendications précédentes,
**caractérisé en ce que** la chambre de fluide caloporteur (4) est réalisée pour le passage de fluide caloporteur coulant et le moyen de passage de carburant (10, 18) est réalisé de telle manière qu'il mène le carburant au moins par section dans un angle de préférence plus au moins droit par rapport au sens d'écoulement du fluide caloporteur.

8. Dispositif selon au moins l'une quelconque des revendications précédentes,
**caractérisé en ce que** la chambre de fluide caloporteur (4) est réalisée pour la réception au moins d'un élément de chauffage (108) de préférence électrique.

9. Dispositif selon au moins l'une quelconque des revendications précédentes,
**caractérisé en ce que** la chambre de fluide caloporteur (4) présente sensiblement la forme d'un tube.

10. Dispositif selon les revendications 5 et 9,
**caractérisé en ce que** la hauteur de l'au moins une chambre (10 ; 18) du moyen de passage de carburant est définie sensiblement dans le sens radial.
